# EUROPEAN PATENT SPECIFICATION

(11) **EP 2 781 724 B1**
(45) Date of publication and mention of the grant of the patent: **17.10.2018**
(21) Application number: 14159806.0
(22) Date of filing: 14.03.2014
(51) Int. Cl.: F02D 41/04, B60R 16/03, F02D 41/22, B60W 50/14

(54) **Engine control device**
Motorsteuerungsvorrichtung
Dispositif de commande de moteur

(30) Priority: 21.03.2013 JP 2013058648
(43) Date of publication of application: 24.09.2014
(73) Proprietor: Keihin Corporation, Tokyo 163-0539 (JP)
(72) Inventor: Wachi, Katsuaki, Tochigi, 3291233 (JP); Haraguchi, Yudai, Tochigi, 3291233 (JP); Oya, Toshiro, Tochigi, 3291233 (JP); Inoue, Toshiro, Tochigi, 3291233 (JP)
(74) Representative: Weickmann & Weickmann PartmbB

(56) References cited:
- EP-A2- 1 950 398
- CN-A- 101 655 130
- JP-A- 2008 094 211
- US-A1- 2013 006 495

## Description

### BACKGROUND OF THE INVENTION

The present invention relates to an engine control device, and more particularly relates to an engine control device that is capable of controlling an indicator to turn on/off.

An indicator device for signifying a vehicle state to a driver is provided in a vehicle. The indicator device includes a scaled indicator that informs the driver of a remaining fuel amount in the vehicle, and an alarm lamp which is a light-emitting indicator that gives the driver a warning of water temperature rise of the vehicle engine, a shortage of oil of the vehicle engine, or the like. For example, when the water temperature of the engine is normal, the alarm lamp is turned off, and when the water temperature of the engine has an abnormal value, the alarm lamp lights up in red to signify the abnormality to the driver.

Japanese Patent Application Laid-Open Publication No. 2000-85410 relates to a layout structure of indicator lamps particularly suitable for a motorcycle, and discloses various types of indicator lamps.

CN-A-101655130 discloses an engine abnormality judgement set of a construction machine. When the fuel leakage is judged to occur in the fuel feeding system of the engine by the machine controller, the battery relay is continuously sustained at an on-state and the initial set-up electric power break time is delayed for a fixed set-up time. Before the reset electric power break time is ended, the alarm movement is performed by an alarming apparatus.

US-A1-2013/006495 discloses a guidance output device which outputs guidance for improving fuel economy when an energy wasting operation is detected in a construction machine that is provided with an exhaust gas purifying device for an internal combustion engine, includes a regeneration process determining unit that determines whether a regeneration process is in progress in the exhaust gas purifying device. It also includes a guidance output restriction unit that restricts an output of the guidance for energy saving by the guidance output unit when the regeneration process determining unit determines that the regeneration process is in progress in the exhaust gas purifying device.

JP-A-2008094211 discloses a battery state determination apparatus which can determine the state of health of a lead battery exactly without an electric current sensor being provided.

### SUMMARY OF THE INVENTION

According to the studies by the present inventors, in the above configuration, an abnormality can be signified to the driver by turning on or blinking an alarm indicator provided in an instrument panel, a meter panel, or the like when a vehicle engine is operating. Even after the vehicle engine has stopped, when power (electrical power) is supplied from a battery of the vehicle to a control device, the alarm indicator can be turned on or blinked, thereby enabling to signify the abnormality to the driver.

However, for example, when a failure that stops the engine occurs, power supply to the control device is turned off, and thus the abnormality (failure) cannot be signified to the driver by turning on or blinking the indicator.

As a countermeasure therefor, it can be considered to have such a configuration that even after the engine stops, power is supplied to the control device for a required time period. However, when the vehicle has a small battery capacity such as a motorcycle, the abnormality needs to be signified to the driver by turning on or blinking the alarm indicator such as an alarm lamp in a power saving mode.

The present invention has been achieved to solve the above described problems, and an object of the present invention is to provide an engine control device that can signify an abnormality of a vehicle to a driver reliably and efficiently, while improving power saving capability of a battery.

To achieve the above object, a first aspect of the present invention as defined by claim 1 is to provide an engine control device including an abnormality detecting unit that detects an abnormality of a vehicle, a signification control unit that controls an indicator for signifying an abnormality detected by the abnormality detecting unit to a driver, an engine-stop judging unit that judges an engine stop, a power-supply switching unit that controls an electrical connection with a battery, and a switching control unit that controls the power-supply switching unit upon receipt of an instruction from the signification control unit, when the engine stop is judged by the engine-stop judging unit, to switch off the electrical connection with the battery, in which the signification control unit controls such that a time period from judgment of the engine stop by the engine-stop judging unit until the electrical connection with the battery is switched off is changed depending on an abnormality status detected by the abnormality detecting unit.

According to a second aspect of the present invention, in addition to the first aspect, the signification control unit controls such that the time period from judgment of the engine stop by the engine-stop judging unit until the electrical connection with the battery is switched off is increased depending on the number of types of abnormalities detected by the abnormality detecting unit.

According to a third aspect of the present invention, in addition to the first or second aspects, the signification control unit controls such that the time period is extended when the abnormality detecting unit detects a new abnormality after judgment of the engine stop by the engine-stop judging unit.

According to the configuration of the present invention, power supply can be maintained only for a time period required for signifying the abnormality to the driver. On the other hand, when no abnormality is detected, power supply is turned off in a short time, thereby enabling to improve the power saving capability of a battery.

### BRIEF DESCRIPTION OF THE DRAWINGS

FIG. 1 is a block diagram showing a configuration of an engine control device according to an embodiment of the present invention;
FIG. 2 is a flowchart for explaining a flow of a control process by the engine control device according to the embodiment;
FIG. 3 is a flowchart for explaining the flow of the control process by the engine control device according to the embodiment; and
FIG. 4 is a timing chart for explaining a specific example of the flow of the control process by the engine control device according to the embodiment.

### DETAILED DESCRIPTION OF THE PREFERRED EMBODIMENT

An embodiment of the present invention is explained below in detail.

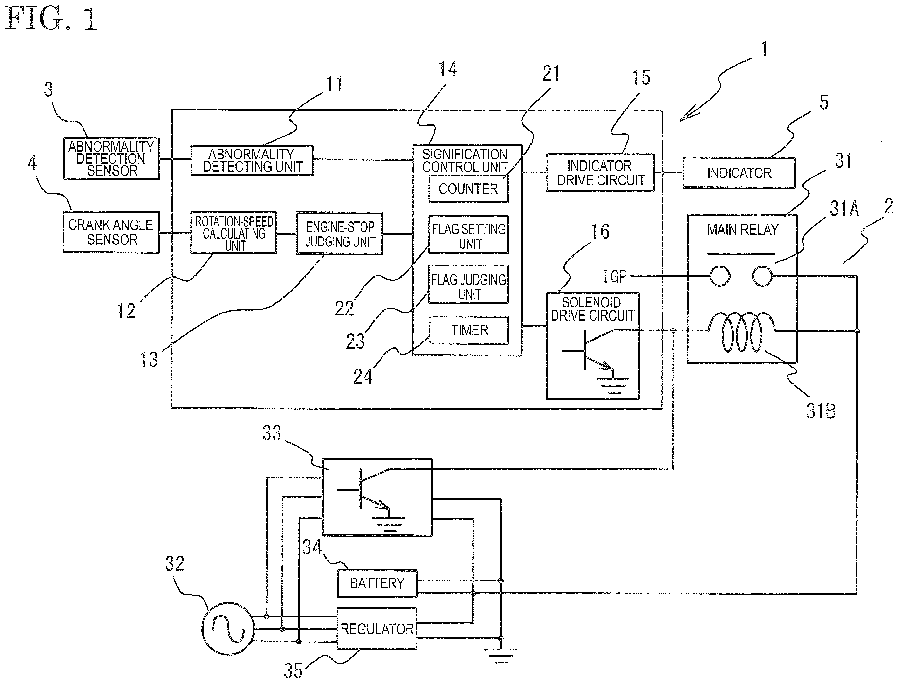

FIG. 1 shows a schematic configuration of an engine control unit (ECU), which is a control device of a vehicle, for example, a motorcycle.

An ECU 1 executes control of a vehicle by receiving power supply from a power supply system 2. In the present embodiment, the ECU 1 is input with a signal of an abnormality detection sensor 3 and a signal of a crank angle sensor 4 of the vehicle, and has a function of controlling turning on/off of a light-emitting indicator 5. The light-emitting indicator 5 includes not only an incandescent lamp but also various types of optical devices, for example, a transmissive optical device such as a liquid crystal and an LED, and reflective and self-luminous optical devices. Further, the ECU 1 includes an abnormality detecting unit 11, a rotation-speed calculating unit 12, an engine-stop judging unit 13, a signification control unit 14, an indicator drive circuit 15, and a solenoid drive circuit 16 (switching control unit), as a configuration for realizing the function of controlling the indicator 5.

The abnormality detecting unit 11 is input with a signal from the abnormality detection sensor 3, to perform a process of detecting an abnormality of various constituent parts of the vehicle. As the abnormality detection sensor 3, for example, an engine water temperature sensor and an intake pressure sensor can be mentioned. The abnormality detecting unit 11 judges that the engine water temperature is abnormal, for example, when a signal of an engine water temperature sensor, which is an example of the abnormality detection sensor 3, exceeds a predetermined threshold, and outputs a signal indicating this fact to the signification control unit 14.

The rotation-speed calculating unit 12 is input with a crank angle signal from the crank angle sensor 4, to calculate engine rotation speed. The rotation-speed calculating unit 12 can calculate the engine rotation speed based on data other than the data of the crank angle sensor 4, for example, based on a change in the intake pressure of the engine.

The engine-stop judging unit 13 judges an operating state of the engine, based on the engine rotation speed calculated by the rotation-speed calculating unit 12. Specifically, when the engine rotation speed is equal to or lower than a predetermined value, the engine-stop judging unit 13 judges that the engine has stopped. A judgment result of the operating state of the engine is transmitted to the signification control unit 14.

The signification control unit 14 is configured to control turning on/off of the indicator 5 when a specific constituent part of the vehicle is in an abnormal state, and to determine a timing of stopping power supply to the ECU 1 at the time of engine stop. As elements that perform such a process, the signification control unit 14 includes a counter 21, a flag setting unit 22, a flag judging unit 23, and a timer 24. The counter 21 counts the number of abnormality significations issued to a driver by using the indicator 5 at the time of occurrence of an abnormality. Further, when multiple types of abnormalities occur, the counter 21 also counts whether a signification has been performed sequentially each time for the respective abnormalities.

The flag setting unit 22 sets a flag F indicating that the abnormality signification by using the indicator 5 has been performed for a preset number of times.

The flag judging unit 23 checks whether a value of the flag F set by the flag setting unit 22 becomes a predetermined value. The flag F is used for finishing the abnormality signifying process.

The timer 24 is used for controlling a time period (time interval) from engine stop until power supply to the ECU 1 is stopped. The timer 24 has, as a time period to be counted, a first time period to be used when there is no abnormality, and a second time period to be used when an abnormality has occurred, to use the first time period and the second time period depending on the presence of an abnormality. For example, when there is no abnormality, the timer 24 starts countdown by using the first time period as an initial value, and when the count value becomes zero, stops power supply to the ECU 1. The timer 24 can control the timing not by counting down but by counting up. It is preferable that the first time period is shorter than the second time period.

The indicator drive circuit 15 generates a control signal for controlling a turn-on state of the indicator 5 upon receipt of a signal from the signification control unit 14, and outputs the control signal to the indicator 5.

The solenoid drive circuit 16 controls power supply to the ECU 1 by controlling on/off of a main relay 31, which is a power-supply switching unit of the power supply system 2.

The indicator 5 is arranged at a position visible from the driver of the vehicle, and is configured to perform turning on/off in a time period instructed by a control signal output from the indicator drive circuit 15.

The power supply system 2 includes a generator 32 connected to the engine, a drive circuit 33, a battery 34, and a regulator 35, and is configured to be able to supply power from the battery 34 to the ECU 1 via the main relay 31. A switch 31A of the main relay 31 can execute on/off control by flowing electric current to a solenoid 31B. The solenoid 31B can execute on/off control by the solenoid drive circuit 16 on the ECU 1 side or the drive circuit 33 of the power supply system 2.

In the present embodiment, it is configured such that power from the generator 32 is supplied to the drive circuit 33 by cranking of the engine, and power from the battery 34 is supplied to the solenoid 31B of the main relay 31, to turn on the switch 31A. Meanwhile, the power supply system 2 can have a configuration of supplying power to the ECU 1 by rotation of a starter motor (not shown).

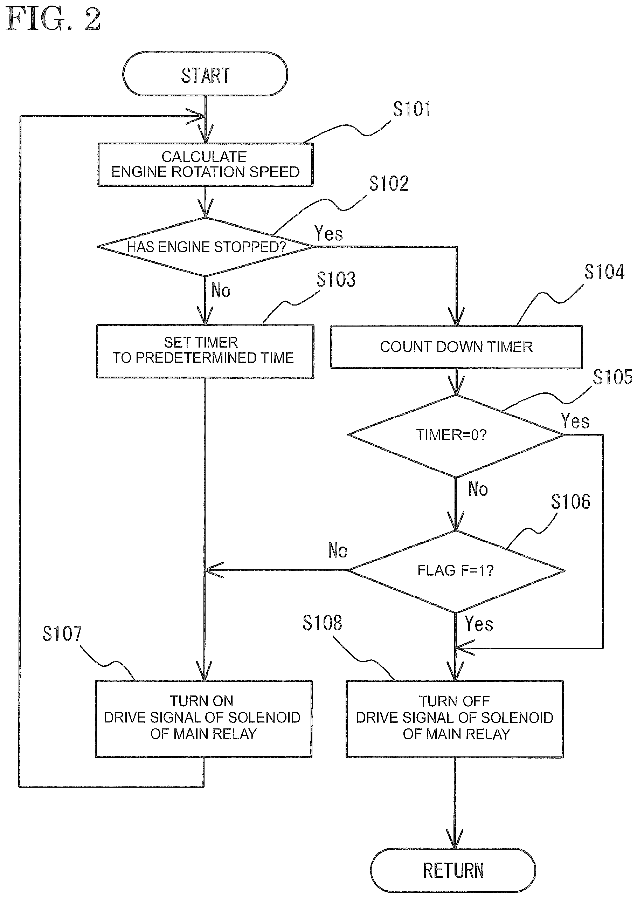

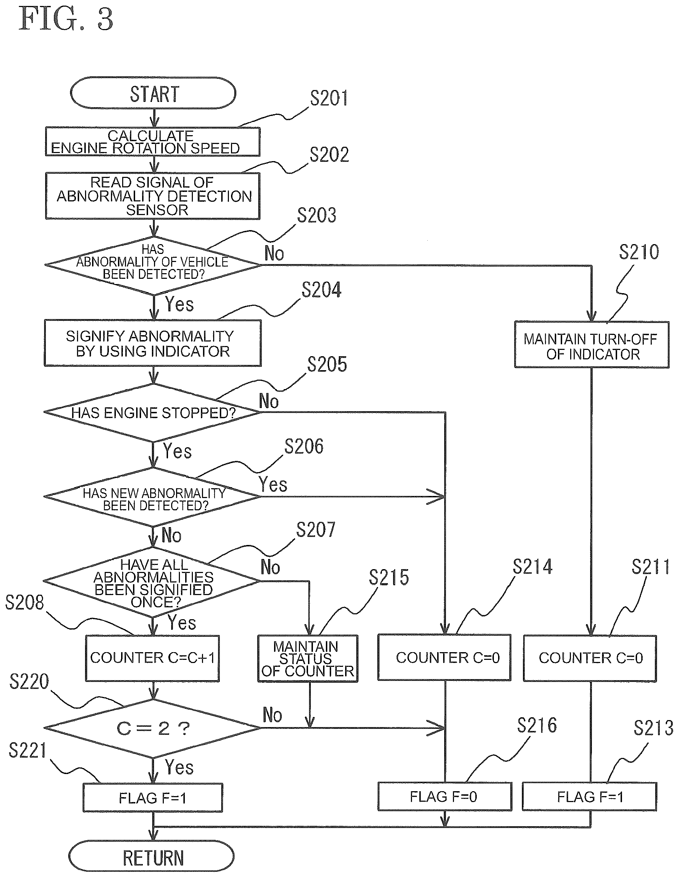

Details of the abnormality signifying process using the ECU 1 are explained next mainly with reference to flowcharts of FIG. 2 and FIG. 3. FIG. 2 mainly shows a process of controlling the main relay 31. FIG. 3 mainly shows a process of setting a flag for controlling the main relay 31.

In the process shown in FIG. 2, countdown of the timer 24 is performed after engine stop, and when the value of the timer 24 becomes "0", power supply to the ECU 1 is stopped. Until then, power supply to the ECU 1 is maintained.

That is, at Step S101, the rotation-speed calculating unit 12 reads the crank angle to calculate the engine rotation speed. Subsequently, at Step S102, when the engine-stop judging unit 13 judges that the engine has not stopped, the process proceeds to Step S103. On the other hand, when the engine-stop judging unit 13 judges that the engine has stopped, the process proceeds to Step S104.

At Step S103, a set time to be counted by the timer 24 is set to a predetermined time Tpre. As the predetermined time Tpre, the first time period is selected when there is no abnormality in the vehicle, and the second time period is selected when there is an abnormality. At Step S107, a drive signal of the solenoid 31B of the main relay 31 is turned ON. Accordingly, power supply to the ECU 1 is continued, and thereafter, the process returns to Step S101. In this case, because the engine has not stopped at Step S102, the solenoid 31B of the main relay 31 is maintained to be turned ON by the signal from the drive circuit 33 outside the ECU 1.

When it is judged that the engine is in a stopped state at Step S102, the timer 24 performs countdown at Step S104. At Step S105, when the value of the timer 24 during countdown is not "0", the process proceeds to Step S106, where the flag judging unit 23 checks the value of the flag F. When the value of the flag F is "0", the process proceeds to Step S107, to turn ON the drive signal of the solenoid 31B of the main relay 31. In this case, because the engine has stopped at Step S102, the main relay 31 is kept turned ON by the signal from the solenoid drive circuit 16 of the ECU 1.

On the other hand, at Step S106, when the value of the flag F is "1", the process proceeds to Step S108. When the value of the timer 24 is "0" at Step S105, the process also proceeds to Step S108.

At Step S108, the drive signal of the solenoid 31B of the main relay 31 is turned OFF. In this case, because the engine has stopped at Step S102, the main relay 31 is turned OFF by stopping a signal output from the solenoid drive circuit 16 of the ECU 1. As a result, power supply to the ECU 1 is stopped, to finish the process by the ECU 1. Thereafter, the process ends.

A setting process of the flag F is explained next mainly with reference to FIG. 3. In the process in FIG. 3, at the time of occurrence of an abnormality, when all the abnormalities have been signified twice, the flag F is set to "1", so that power supply to the ECU 1 can be stopped. Until all the abnormalities have been signified twice, the flag F is maintained to be "0" so that power supply to the ECU 1 is not stopped. When a new abnormality is added during signifying the abnormality, the value of the counter 21 is reset, to recount the number of abnormality significations from 1.

That is, at Step S201, the rotation-speed calculating unit 12 reads the crank angle to calculate the engine rotation speed. Subsequently, at Step S202, the abnormality detecting unit 11 reads a signal from the abnormality detection sensor 3. At Step S203, if the abnormality detecting unit 11 has detected an abnormality of the vehicle, the indicator 5 repeats turning on/off to signify the abnormality to the driver at Step S204. Specifically, the indicator drive circuit 15 blinks the indicator 5 depending on the type of abnormality, based on an instruction from the signification control unit 14. Blinking the indicator 5 depending on the type of abnormality means that the indicator 5 is blinked for the number of times and with a time interval preset for each type of abnormality. It also means that a plurality of indicators 5 are blinked for the number of times and with a time interval preset for each type of abnormality.

At this time, when it is judged that the engine has stopped at Step S205, the process proceeds to Step S206. At Step S206, if a new abnormality is not detected after engine stop, the process proceeds to Step S207.

The present embodiment is characterized such that when multiple types of abnormalities occur, after all the abnormalities have been signified twice, power supply to the ECU 1 is stopped. Therefore, at Step S207, it is checked whether the indicator 5 has signified all the abnormalities once each. For example, when two types of abnormalities have occurred, it is judged whether the counter 21 has counted blinking of the indicator 5 for signifying the first abnormality, and blinking of the indicator 5 for signifying a second abnormality, once each. When the abnormality signification by the indicator 5 has finished once for all the abnormalities, the value C of the counter 21 is incremented at Step S208.

Further, when the value C of the counter 21 is C=2 at Step S220, it means that all the abnormalities have been signified twice. Therefore, the process proceeds to Step S221, where the flag setting unit 22 sets the value of the flag F for finishing the abnormality signifying process to "1", to end the process.

At Step S203, when no abnormality of the vehicle is detected, the indicator 5 need not be blinked. Therefore, the process proceeds to Step S210, and the signification control unit 14 maintains turn-off of the indicator 5. Thereafter, at Step S211, the value C of the counter 21 is set to "0", and at Step S213, the flag setting unit 22 sets the value of the flag F to "1".

At Step S205, when an engine stop is not judged, the process proceeds to Step S214, to set the value C of the counter 21 to "0". Subsequently, at Step S216, the flag setting unit 22 sets the value of the flag F to "0". Further, at Step S206, when a new abnormality is detected by the abnormality detecting unit 11 during signifying the abnormality, the process proceeds to Step S214, to reset the value C of the counter 21 to "0". Accordingly, abnormality signification is restarted from the initial step. Thereafter, at Step S216, the flag setting unit 22 sets the value of the Flag F to "0", to end the process.

When all the abnormalities have not been signified once each by the indicator 5 at Step S207, the value C of the counter 21 is not changed at Step S215, and the process proceeds to Step S216. Even when the value C of the counter 21 is not "2" at Step S220, the process proceeds to Step S216.

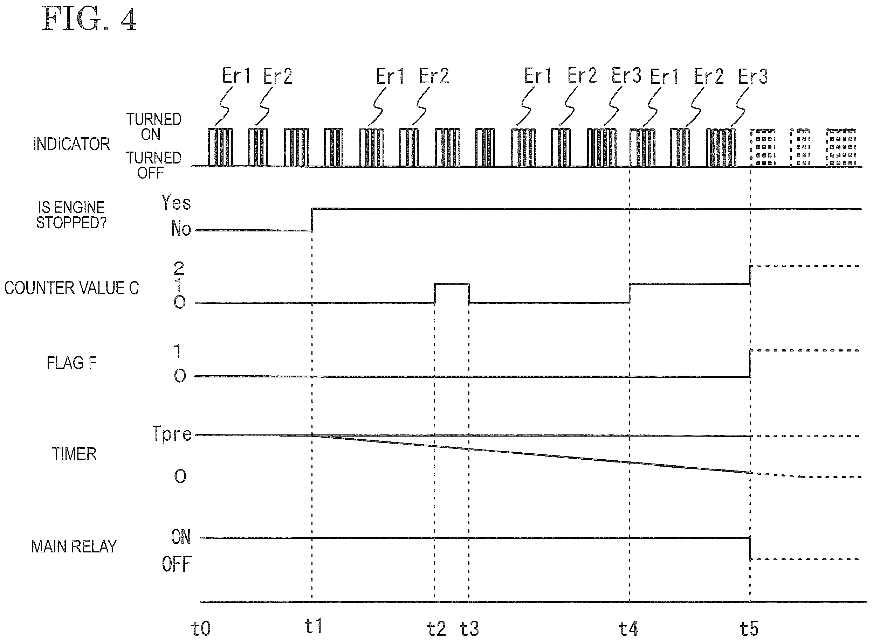

A specific example of the abnormality signifying process is explained next with reference to a timing chart in FIG. 4. A horizontal axis denotes time and a vertical axis denotes, from the top, display of the indicator 5, judgment result of engine stop, value C of the counter 21, value of the flag F, value of the timer 24, and drive signal of the solenoid 31B of the main relay 31.

The display of the indicator 5 indicates cases in which three types of abnormalities, an abnormality Er1, an abnormality Er2, and an abnormality Er3 are detected. When it is the abnormality Er1, the indicator 5 is blinked four times. When it is the abnormality Er2, the indicator 5 is blinked three times. When it is the abnormality Er3, the indicator 5 is blinked five times. Thus, the driver can confirm occurrence of an abnormality and the type thereof by the number of blinking and the lighting time interval of the indicator 5. The type of abnormality, the number of blinking, and the time interval of turning on/off are not limited to this example.

As a judgment result of engine stop, "YES" indicates that the engine stop is judged, and "NO" indicates that it is judged that the engine has not stopped.

The value C of the counter 21 indicates the number of significations of the abnormalities Er1 to Er3. That is, the value C of the counter 21 C=0 indicates that the abnormalities Er1 to Er3 currently detected have not been signified. The value C of the counter 21 C=1 indicates that the abnormalities Er1 to Er3 currently detected are signified once. The value C of the counter 21 C=2 indicates that the abnormalities Er1 to Er3 currently detected are signified twice.

The value of the flag F is for judging whether the value C of the counter 21 has become "2". The flag F is used for confirming whether the abnormality signification has been performed for a specified number of times. When the specified number of times is three, when the value C of the counter 21 becomes "3", the flag F is set to "1".

The value of the timer 24 is counted down from the initial value Tpre. When the value of the timer 24 becomes "0", power supply to the ECU 1 is stopped.

When the drive signal of the solenoid 31B of the main relay 31 is turned ON, power supply to the ECU 1 is maintained. When the drive signal is turned OFF, power supply to the ECU 1 is stopped.

For example, in a stage of a time point t0, the abnormality Er1 and the abnormality Er2 have already been detected. Thereafter, when the engine stops at a time point t1, the timer 24 starts countdown from the initial value Tpre. In this case, because abnormalities have been detected, the second time period is set for the initial value Tpre of the timer 24.

The counter 21 counts the number of blinking for the abnormality Er1 and the abnormality Er2 in this order, after engine stop has been judged. That is, because the indicator 5 has blinked once for the two abnormalities Er1 and Er2 sequentially between the time point t1 and a time point t2, the value C of the counter 21 is incremented to "1" at the time point t2. Thereafter, second blinking for the abnormalities Er1 and Er2 is started.

When an abnormality Er3 is newly detected at a time point t3, the value C of the counter 21 is reset to "0". Thereafter, a process of blinking the indicator 5 sequentially for the three abnormalities Er1 to Er3 is started. When the indicator 5 is blinked once each for the abnormalities Er1 to Er3 at a time point t4, the value C of the counter 21 is incremented to "1". When the indicator 5 is blinked twice each for the abnormalities Er1 to Er3 at a time point t5, the value C of the counter 21 is incremented to "2". Accordingly, "1" is set to the flag F, and the drive signal of the solenoid 31B of the main relay 31 becomes turned OFF to stop power supply to the ECU 1. Accordingly, control by the ECU 1 ends, and the indicator 5 is turned off.

In this case, the value of the timer 24 does not become zero at the time point t5. That is, the abnormality signification has ended before countdown of the timer 24 is complete. On the other hand, the value of the timer 24 may become zero, before the value of the flag F becomes "1" at the time point t5. In this case, power supply to the ECU 1 is stopped and the indicator 5 is turned off, even when the indicator 5 has not been blinked for the abnormalities Er1 to Er3 for the specified number of times. Further, when no abnormality is detected, the first time period is set for the initial value Tpre of the timer 24. As a result, the value of the timer 24 becomes "0" earlier than the time indicated by the timing chart in FIG. 4, and power supply to the ECU 1 is stopped.

As explained above, the ECU 1 is configured to change the time period until power supply to the ECU 1 is intercepted depending on the state of abnormality, when an abnormality of a vehicle is detected. When an abnormality occurs in a vehicle, the indicator 5 can be blinked reliably even after engine stop.

When the state of abnormality of the vehicle is different, a time period required for signifying the abnormality becomes different. As the state of abnormality, the type of abnormality and the number of types of abnormalities can be mentioned. Depending on the type of abnormality corresponds to extending the power supplying time to the ECU 1 in a case of an abnormality in which the blinking time of the indicator 5 needs to be long, and shortening the power supplying time to the ECU 1 in a case of an abnormality in which the blinking time of the indicator 5 can be short, when the blinking time of the indicator 5 required for signifying the abnormality to the driver once is different. Further, depending on the number of types of abnormalities corresponds to extending the power supplying time to the ECU 1 when there are many types of abnormalities, because the time period required for signifying the abnormalities once each increases, and shortening the power supplying time to the ECU 1 when there are less types of abnormalities, because the time period required for signifying the abnormalities once each can be short.

Further, the ECU 1 is configured to change the time period until power supply to the ECU 1 is turned off within the range of the second time period, depending on the number of types of abnormalities. Therefore, the time period required for signifying the abnormality can be easily set, and sufficient time can be reliably ensured. When an abnormality is detected, power supply to the ECU 1 is stopped at a point in time when all the abnormalities are signified for the predetermined number of times, or the second time period has passed, whichever finishes first. On the other hand, when no abnormality is detected, the first time period shorter than the second time period is selected as the time period until power supply is turned off, and thus power saving capability of the battery 34 can be improved.

Furthermore, during signifying an abnormality, when a new abnormality is detected, the time period until power supply to the ECU 1 is turned off can be extended within the range of the second time period. Therefore, the time period required for signifying all the abnormalities can be reliably ensured. When a plurality of types of abnormalities are detected, sufficient time for signifying these abnormalities for the predetermined number of times is set as the second time period. Accordingly, it can be prevented that the ECU is stopped before signifying all the detected failures to the driver.

The present invention is not limited to the above embodiment and is widely applicable. For example, a measurement unit that measures the voltage of the battery 34 can be provided in the ECU 1, and when the voltage of the battery 34 is equal to or lower than a predetermined value, a time period shorter than the second time period can be selected as the time period until power supply to the ECU 1 is turned off, thereby enabling to prevent deterioration of reliability in abnormality detection.

In an engine control device, a signification control unit controls such that a time period from judgment of an engine stop by an engine-stop judging unit until an electrical connection with a battery is switched off is changed depending on an abnormality status detected by an abnormality detecting unit.

## Claims

1. An engine control device comprising:
an abnormality detecting unit that detects an abnormality of a vehicle;
a signification control unit that controls an indicator for signifying an abnormality detected by the abnormality detecting unit to a driver;
an engine-stop judging unit that judges an engine stop;
a power-supply switching unit that controls an electrical connection with a battery; and
a switching control unit that controls the power-supply switching unit upon receipt of an instruction from the signification control unit, when the engine stop is judged by the engine-stop judging unit, to switch off the electrical connection with the battery,
**characterized in that** the signification control unit controls such that a time period from judgment of the engine stop by the engine-stop judging unit until an electrical connection with the battery is switched off is changed depending on an abnormality status comprising a type of abnormality and/or a number of types of abnormalities detected by the abnormality detecting unit.

2. The engine control device according to claim 1, wherein the signification control unit controls such that the time period from judgment of the engine stop by the engine-stop judging unit until the electrical connection with the battery is switched off is increased depending on the number of types of abnormalities detected by the abnormality detecting unit.

3. The engine control device according to claim 1 or 2, wherein the signification control unit controls such that the time period is extended when the abnormality detecting unit detects a new abnormality after judgment of the engine stop by the engine-stop judging unit.

## Patentansprüche

1. Motor-Steuer-/Regelvorrichtung, umfassend:
eine Anomalie-Detektionseinheit, welche eine Anomalie eines Fahrzeugs detektiert;
eine Anzeige-Steuer-/Regeleinheit, welche einen Indikator zum Anzeigen einer von der Anomalie-Detektionseinheit detektierten Anomalie zu einem Fahrer steuert/regelt;
eine Motorstopp-Bewertungseinheit, welche einen Motorstopp bewertet;
eine Leistungszufuhr-Schalteinheit, welche eine elektrische Verbindung mit einer Batterie steuert/regelt; und
eine Schalt-Steuer-/Regeleinheit, welche die Leistungszufuhr-Schalteinheit auf ein Erhalten einer Anweisung von der Anzeige-Steuer-/Regeleinheit hin steuert/regelt, wenn der Motorstopp von der Motorstopp-Bewertungseinheit bewertet wird, um die elektrische Verbindung mit der Batterie auszuschalten, **dadurch gekennzeichnet, dass** die Anzeige-Steuer-/Regeleinheit derart steuert/regelt, dass eine Zeitperiode von einer Bewertung des Motorstopps durch die Motorstopp-Bewertungseinheit bis eine elektrische Verbindung mit der Batterie ausgeschaltet wird, geändert wird, abhängig von einem Anomalie-Status, umfassend einen Typ einer Anomalie und/oder eine Anzahl von Typen von Anomalien, welche durch die Anomalie-Detektionseinheit detektiert wird/werden.

2. Motor-Steuer-/Regelvorrichtung nach Anspruch 1, wobei die Anzeige-Steuer-/Regeleinheit derart steuert/regelt, dass die Zeitperiode von dem Bewerten des Motorstopps durch die Motorstopp-Bewertungseinheit bis die elektrische Verbindung mit der Batterie ausgeschaltet wird, erhöht wird, abhängig von der Anzahl von Typen von durch die Anomalie-Detektionseinheit detektierten Anomalien.

3. Motor-Steuer-/Regeleinheit nach Anspruch 1 oder 2, wobei die Anzeige-Steuer-/Regeleinheit derart steuert/regelt, dass die Zeitperiode vergrößert wird, wenn die Anomalie-Detektionseinheit nach dem Bewerten des Motorstopps durch die Motorstopp-Bewertungseinheit eine neue Anomalie detektiert.

## Revendications

1. Dispositif de commande moteur comprenant :
une unité de détection d'anomalies qui détecte une anomalie d'un véhicule ;
une unité de commande de signification qui commande un indicateur pour signifier une anomalie détectée par l'unité de détection d'anomalies à un conducteur ;
une unité d'estimation d'arrêt moteur qui estime un arrêt moteur ;
une unité de commutation d'alimentation électrique qui commande une connexion électrique avec une batterie ; et
une unité de commande de commutation qui commande l'unité de commutation d'alimentation électrique lors de la réception d'une instruction en provenance de l'unité de commande de signification, lorsque l'arrêt moteur est estimé par l'unité d'estimation d'arrêt moteur, pour interrompre la connexion électrique avec la batterie ;
**caractérisé en ce que** l'unité de commande de signification réalise une commande telle qu'une période de temps allant de l'estimation de l'arrêt moteur par l'unité d'estimation d'arrêt moteur jusqu'à ce qu'une connexion électrique avec la batterie soit interrompue est changée en fonction d'un statut d'anomalie comprenant un type d'anomalie et/ou un nombre de types d'anomalies détectées par l'unité de détection d'anomalies.

2. Dispositif de commande moteur selon la revendication 1, dans lequel l'unité de commande de signification réalise une commande telle que la période de temps allant de l'estimation de l'arrêt moteur par l'unité d'estimation d'arrêt moteur jusqu'à ce que la connexion électrique avec la batterie soit interrompue est augmentée en fonction du nombre de types d'anomalies détectées par l'unité de détection d'anomalies.

3. Dispositif de commande moteur selon la revendication 1 ou 2, dans lequel l'unité de commande de signification effectue une commande telle que la période de temps est prolongée lorsque l'unité de détection d'anomalie détecte une nouvelle anomalie après estimation de l'arrêt moteur par l'unité d'estimation d'arrêt moteur.
